# EUROPEAN PATENT SPECIFICATION

(11) **EP 4 219 430 B1**
(45) Date of publication and mention of the grant of the patent: **23.07.2025**
(21) Application number: 22207764.6
(22) Date of filing: 16.11.2022
(51) Int. Cl.: C04B 41/52, C04B 41/00, C04B 41/89, F01D 5/28, F01D 25/00

(54) **BONDCOAT INCLUDING COARSE OXYGEN GETTER PARTICLES**
BINDUNGSSCHICHT MIT GROBKÖRNIGEN SAUERSTOFFGETTER-TEILCHEN
COUCHE DE LIAISON COMPRENANT DES PARTICULES GROSSIÈRES DE GETTER D'OXYGÈNE

(30) Priority: 27.01.2022 US 202217585957
(43) Date of publication of application: 02.08.2023
(73) Proprietor: General Electric Company, Evendale, OH 45215 (US)
(72) Inventor: WAN, Julin, Niskayuna, 12309 (US)
(74) Representative: Openshaw & Co.

(56) References cited:
- EP-A1- 3 670 480

## Description

### FIELD

The present invention generally relates to bond coats for use with environmental barrier coatings on ceramic components, particularly silicon-based ceramic matrix components, along with methods of their formation and use.

### BACKGROUND

Higher operating temperatures for gas turbine engines are continuously being sought in order to improve their efficiency. However, as operating temperatures increase, the high temperature durability of the components of the engine must correspondingly increase. Significant advances in high temperature capabilities have been achieved through the formulation of iron, nickel, and cobalt-based superalloys. Still, with many hot gas path components constructed from superalloys, thermal barrier coatings (TBCs) can be utilized to insulate the components and can sustain an appreciable temperature difference between the load-bearing alloys and the coating surface, thus limiting the thermal exposure of the structural component.

While superalloys have found wide use for components used throughout gas turbine engines, and especially in the higher temperature sections, alternative lighter-weight substrate materials have been proposed, such as ceramic matrix composite (CMC) materials, in particular silicon carbide (SiC) fiber reinforced SiC and SiC-Si matrix composites, so called SiC/SiC composites. CMC and monolithic ceramic components can be coated with environmental barrier coatings (EBCs) to protect them from the harsh environment of high temperature engine sections. EBCs can provide a dense, hermetic seal against the corrosive gases in the hot combustion environment.

Silicon carbide and silicon nitride ceramics undergo oxidation in dry, high temperature environments. This oxidation produces a passive, silicon oxide scale on the surface of the material. In moist, high temperature environments containing water vapor, such as a turbine engine, both oxidation and recession occurs due to the formation of a passive silicon oxide scale and subsequent conversion of the silicon oxide to gaseous silicon hydroxide. To prevent recession in moist, high temperature environments, environmental barrier coatings (EBC's) are deposited onto silicon carbide and silicon nitride materials.

Currently, EBC materials are made out of rare earth silicate compounds. These materials seal out water vapor, preventing it from reaching the silicon oxide scale on the silicon carbide or silicon nitride surface, thereby preventing recession. Such materials cannot prevent oxygen penetration, however, which results in oxidation of the underlying substrate. Oxidation of the substrate yields a passive silicon oxide scale, along with the release of carbonaceous or nitrous oxide gas. The carbonaceous (i.e., CO, CO₂) or nitrous (i.e., NO, NO₂, etc.) oxide gases cannot escape out through the dense EBC and thus, blisters form, which can cause spallation of the EBC. The use of a silicon bond coat has been the solution to this blistering problem to date. The silicon bond coat provides a layer that oxidizes (forming a passive silicon oxide layer beneath the EBC) without liberating a gaseous by-product.

However, the presence of a silicon bond coat limits the upper temperature of operation for the EBC because the melting point of silicon metal is relatively low, at 1414 °C. Above these melting temperatures, the silicon bond coat may delaminate from the underlying substrate, effectively removing the bond coat and the EBC thereon. Recently, high temperature EBCs have been contemplated that utilize a bond coat containing silicon particles as an oxygen getter.

However, these high temperature EBCs have shown a weakness in intermediate temperature ranges. Due to oxidation expansion of the getter phase, the matrix phase experiences tensile stress that cannot be accommodated at lower temperatures, leading to micro-cracking and fast oxidation that invalidates the EBC. As such, it is desirable to have improved bond coats in the EBC to achieve a higher operational temperature limit for the EBC while remaining effective in lower and intermediate temperatures.

EP 3 670 480 A1 relates to an environmental barrier coating with a mullite bondcoat that includes an oxygen getter phase.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 is a cross-sectional side view of an exemplary coated component including a bond coat and an EBC thereon;
FIG. 2 is a cross-sectional side view of an exemplary bond coat formed from a matrix having discrete particles dispersed therein;
FIG. 3 is a schematic cross-sectional view of an exemplary gas turbine engine according to various embodiments of the present subject matter;
FIG. 4 is a diagram of an exemplary method of forming a coated component having a bond coat formed from a matrix having discrete particles dispersed therein;
FIG. 5 shows a cross-sectional picture of an exemplary bond coat formed according to the examples with 20 µm discrete particles dispersed in a matrix; and
FIG. 6 shows a cross-sectional picture of a comparative bond coat formed according to the examples with 1-2 µm discrete particles dispersed in a matrix.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

As used herein, the terms "first", "second", and "third" may be used interchangeably to distinguish one component from another and are not intended to signify location or importance of the individual components.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "RE" refers to a rare earth element or a mixture of rare earth elements. More specifically, the " RE" refers to the rare earth elements of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

As used herein, "alumina" refers to an aluminum oxide in the form of Al₂O₃.

As used herein, "silica" refers to a silicon oxide in the form of SiO₂.

As used herein, the term "mullite" generally refers to a mineral containing alumina and silica. That is, mullite is a chemical compound of alumina and silica with an alumina (Al₂O₃) and silica (SiO₂) ratio of 3 to 2 (e.g., within 10 mole % of 3 to 2 of alumina to silica). However, a ratio of 2 to 1 has also been reported as mullite (e.g., within 10 mole % of 2 to 1 of alumina to silica).

As used herein, the term "substantially free" means no more than an insignificant trace amount present and encompasses completely free (e.g., 0 molar % up to 0.01 molar %).

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

A coated component is generally provided that includes a bond coat containing a matrix phase having a plurality of discrete particles dispersed therein, along with methods of its formation and use. The discrete particles are generally coarse so as to have a large enough size such that the oxidation reaction thereof occurs relatively slowly through the bond coat's thickness. Without wishing to be bound by any particular theory, it is believed that the oxidation occurs on only a thin surface layer of the relatively coarse particles, effectively slowing the oxidation of the discrete particles compared to finer particles. As such, the presence of the relatively coarse particles may create a stress state that is more manageable compared to finer particles, thus leading to less cracking tendency. Additionally, oxidation of the relatively coarse particles may create a diffuse reaction zone within the thickness of the bond coat, instead of a sharp reaction front that may be seen with smaller particles. In addition, the discrete particles are subject to oxidation or evaporation during the manufacturing process of the coating. Coarse particles provide the advantage of slowing down such degradation and thus may help maintain a desired proportion of particles in the bond coat.

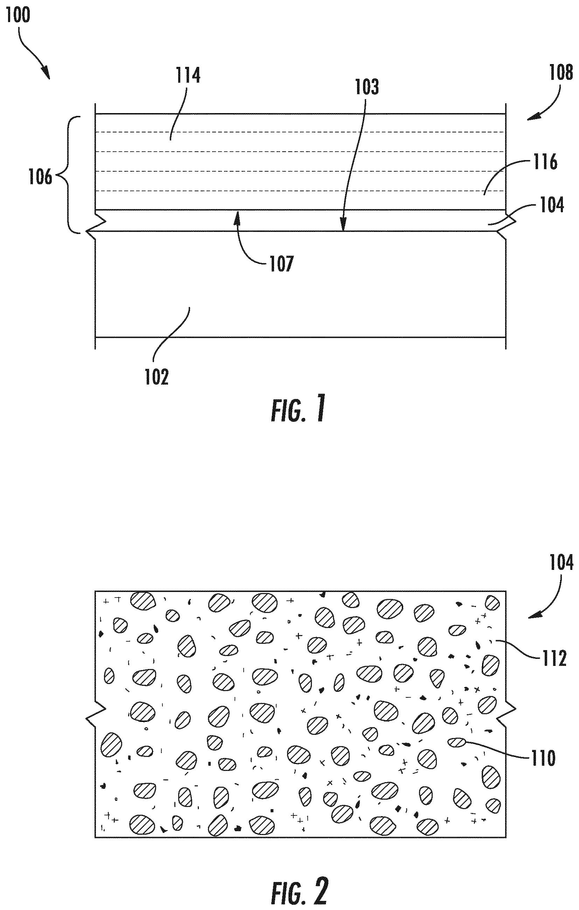

The bond coat containing the matrix phase and including the discrete particles is, in one particular embodiment, generally positioned between the surface of the substrate and an environmental barrier coating (EBC) thereon. Referring to FIG. 1, an exemplary coated component 100 is shown formed from a substrate 102 having a surface 103 with a coating system 106 thereon. Generally, the coating system 106 includes a bond coat 104 on the surface 103 of the substrate, and an EBC 108 on the bond coat 104. In the embodiment shown, the bond coat 104 is directly on the surface 103 without any layer therebetween.

In the exemplary embodiment of FIG. 2, the bond coat 104 is shown having a matrix phase 112 with discrete particles 110 dispersed therein. In the embodiment shown, the matrix phase 112 forms a continuous phase of the bond coat 104. Additionally, in the embodiment shown, the matrix phase 112 spans the thickness of the bond coat 104 and is bonded directly to the surface 103 of the substrate 102 and to an inner surface 107 of the EBC 108.

Generally, the plurality of discrete particles comprises an oxygen getter configured to react with oxygen during use of the component, so as to inhibit oxygen from reaching the underlying surface 103 of the substrate 102. In one embodiment, the oxygen getter comprises silicon, such as elemental silicon. For example, the oxygen getter may consist essentially of silicon (at the time of the bond coat's formation) such that at least 95% by weight of the oxygen getter is silicon (prior to exposure to any oxygen), such as at least 99% by weight of the oxygen getter.

In one particular embodiment, the bond coat 104 may be formed from elemental silicon (as the discrete particles 110) contained within the matrix phase 112. As explained in greater detail below, the elemental silicon within the mullite may melt during operation of the coated component, while remaining contained within the matrix phase and while keeping the functions of the bond coat 104. Such functions of the bond coat 104 may include, but are not limited to, bonding the substrate to the EBC thereon and gettering of oxygen without releasing gas to prevent oxidation of the underlying substrate that would otherwise result in a gaseous by-product. Thus, liquid discrete particles may be utilized within the bond coat 104 during operation of the coated component (e.g., within a gas turbine engine). Since the bond coat 104 continues to function above the melting point of the discrete particles, the coated component can be operated at temperatures above the melting point of the discrete particles.

Although silicon does not oxidize to form a gas like CO from SiC, it does form silicon hydroxides gaseous species when in contact with water vapor. However, the partial pressures of the silicon hydroxides gaseous species are sufficiently low so that they do not significantly form gas bubbles. Moreover, these partial pressures inhibit recession unless there are interconnected pores to the outside gas surface. The density of the mullite matrix and the hermeticity of the upper layers of the EBC may be controlled to minimize the formation of silicon hydroxide.

As stated above, the plurality of discrete particle has a relatively large size (i.e., coarse particles) such that an oxidation reaction of the oxygen getter occurs relatively slowly through the bond coat's thickness. However, if the discrete particles 110 are too large in size and/or too much in content, the discrete particles may form a continuous phase in use at temperatures where the oxygen getter liquifies (e.g., above 1414°C when comprising silicon). Too much continuous phase (formed by the liquified too large discrete particles) could lead to spallation of the coating.

The plurality of discrete particle has 50% of its volume or greater (e.g., 75% of its volume or greater) formed from particles having an average size of 10 µm to 100 µm. In one embodiment, the plurality of discrete particle has 50% of its volume or greater (e.g., 75% of its volume or greater) formed from particles having an average size of 20 µm to 75 µm. In one particular embodiment, the plurality of discrete particle has 50% of its volume or greater (e.g., 75% of its volume or greater) formed from particles having an average size of 30 µm to 50 µm. Thus, without wishing to be bound by any particular theory, it is believed that the presence of these relatively large particles slows the oxidation reaction to create a diffuse reaction zone, leading to reduced stress due to expansion and inhibiting cracking.

No matter the configuration of the bond coat 104, the discrete particles 110 are contained, upon melting of the oxygen getter, within the matrix phase 112 between the surface 103 of the substrate 102 and the inner surface 107 of the environmental barrier coating 108. That is, the matrix phase 112 may form a 3-dimensional network that spans the thickness of the bond coat 104 and is bonded to the surface 103 of the substrate 102 and to the inner surface 107 of the environmental barrier coating 108. As such, the matrix phase 112 works with the surface 103 of the substrate 102 and the environmental barrier coating 108 to contain the melted discrete particles therein while keeping the integrity of the bond coat 104 without delamination from the surface 103 of the substrate 102.

Thus, the matrix phase 112 is included in the bond coat 104 in an amount to provide structural integrity to the bond coat 104 while the discrete particles 110 are melted at operating temperatures, such as above the melting point of elemental silicon (i.e., 1414 °C) when the oxygen getter is silicon, while incorporating sufficient amounts of the oxygen getter therein. The matrix phase 112 also functions to limit the diffusion of oxidants, namely oxygen or water vapor, to reach the discrete particles 110. The bond coat 104 includes 60% to 98% by volume of the matrix phase comprising mullite, such as 65% to 96% by volume matrix phase comprising mullite, such as 75% to 95% by volume matrix phase comprising mullite

The discrete particles 110 are included in the bond coat 104 in an amount sufficient to serve as an oxygen getter to inhibit oxygen from reaching the underlying substrate 102. In one particular embodiment, the discrete particles 110 may be formed from silicon metal (i.e., elemental silicon), a silicon alloy (e.g., a silicon eutectic alloy), a silicide, or mixtures thereof. As such, the discrete particles 110 may melt when the bond coat 104 reaches temperatures of 1400 °C to 2550 °C, depending on the composition of the discrete particles 110. In some embodiments, the matrix phase 112 comprises mullite and has a melting point of 1825°C to 1890 °C . Under some circumstances, the temperature of the bond coat 104 can be above the melting point of the discrete particles 110 but below the melting point of the matrix phase 112, so that the discrete particles 110 become molten. For example, the discrete particles 110 may have at a melting temperature of 1414 °C (i.e., the melting point of elemental silicon) to 1485 °C. In particular embodiments, the discrete particles 110 may be formed from a silicon material that is molten at a bond coat temperature of 1415 °C, 1450 °C, 1550 °C, and/or 1600 °C.

For example, the bond coat 104 may, in certain embodiments, include 2% to 40% by volume of the discrete particles 110, such as 4% to 35% by volume of the discrete particles 110 (e.g., 5% to 25% by volume of the discrete particles 110). In particular embodiments, for example, the discrete particles 110 may include 5% to 40% by volume of elemental silicon, such as 7% to 35% by weight of elemental silicon (e.g., 5% to 25% by volume of elemental silicon). Elemental silicon has a melting point of 1414 °C. As used herein, "elemental silicon" refers to silicon without any alloying materials present, outside of incidental impurities.

In certain embodiments, a silicide having a melting point of 1900 °C or less (e.g., 1400 °C to 1900 °C) may also be in the discrete particles 110. Determining the melting point of a particular silicide may be easily achieved using Si phase diagrams.

In particular embodiments, the oxygen getter within the discrete particles may have minimal thermal expansion coefficient mismatch with the substrate and mullite (e.g., no more than 2-3 ppm per °C) to avoid matrix cracks. However, those skilled in the art know that a larger expansion coefficient mismatch can be accommodated by reducing the volume fraction of the getter phase. In another particular embodiment, the oxygen getter should have minimal volume increase on oxidation (e.g., no more than 150%, preferably no more than 100%, and more preferably a volume reduction on oxidation rather than a volume expansion) to reduce the stresses in the mullite layer and its cracking. Many embodiments of the discrete particles are possible that satisfy the requirements for the expansion coefficient mismatch and the volume change on oxidation. In one embodiment, the oxygen getter comprises elemental silicon, and may be pure elemental silicon. In another embodiment, it comprises a silicon alloy and/or a silicide. In the embodiment where the discrete particles includes elemental silicon-, then the bond coat may be referred to as a "mullite/Si bond coat." Silicon oxidation causes a volume expansion of 115% to 130% when it forms amorphous silica and a volume expansion of 85% when it forms crystalline silica. However, the oxidation product is invariably amorphous first, which can then become crystalline with time.

Other embodiments of oxygen getters may include, but are not limited to, nickel, cobalt, chromium, or mixtures thereof. These oxygen getters may also be used in particular embodiments with silicon, a silicon alloy, and/or a silicide. For example, nickel has a much higher expansion mismatch (almost 8 ppm per °C) with the substrate and mullite. Therefore, the maximum volume fraction of nickel that can be tolerated would be lower than that of silicon which has a mismatch of less than 1 ppm per °C. However, nickel has a volume expansion on oxidation of 65% compared to 115% to 130% for silicon converting to amorphous silica. Chromium, on the other hand, has a lower expansion mismatch with the substrate and mullite than does nickel. It also has a higher melting temperature (1907 °C) compared to silicon (1410 °C) and nickel (1455 °C).

The matrix phase 112 may comprise an oxide material, particularly oxide materials having a melting temperature that is greater than the melting temperature of the oxygen getter. Additionally, the matrix phase 112 may comprise an oxide material that is generally unreactive with the oxygen getter of the discrete particles 110, even at elevated operating temperatures. In one particular embodiment, the matrix phase 112 is formed from crystallized mullite having a melting temperature that is greater than the melting temperature of the oxygen getter. In particular embodiments, the mullite has a melting temperature that is about 1825 °C to 1890 °C and is generally unreactive with the silicon material of the discrete particles 110 (e.g., elemental silicon).

In one embodiment, the matrix phase 112 may include mullite having an excess of alumina, up to 10 mole % of excess alumina. For example, the matrix phase 112 may include mullite formed from alumina and silica in a stoichiometric ratio of 3 to 2 up to 3.5 to 2 or in a stoichiometric ratio of 2 to 1 up to 2.25 to 1. In another embodiment, the matrix phase 112 may include mullite containing an excess of silica.

Mullite generally has a relatively slow diffusion rate for oxygen at all temperatures of interest, even up to 1650 °C (e.g., 1200 °C to 1650 °C). At temperatures over 1200 °C, it is believed that the only other crystalline oxide that has lower oxygen diffusion rate than mullite is alumina, which has a very high expansion coefficient compared to the substrate and cannot be deposited as dense coatings without spallation. Although mullite has a coefficient of thermal expansion ("CTE") that is similar to that of a SiC CMC substrate 102, the CTE of mullite is not an exact match to SiC. The slight mismatch of CTE of mullite and SiC could lead to problems related to thermal expansion, such as cracking and/or delamination, if the bond coat 104 is too thick. For example, it is believed that a bond coat 104 having a thickness of 20 mils (i.e., 508 µm) would lead to problems related to the CTE mismatch after repeated exposure to the operating temperatures. On the other hand, it is believed that a bond coat 104 having a maximum thickness of 15 mils or less, such as 1 mil to 15 mils (i.e., 381 µm or less, such as 25.4 µm to 381 µm), would survive such operating temperatures without significant problems from the CTE mismatch. In one particular embodiment, the bond coat 104 has a maximum thickness of 10 mils, such as 3 mils to 10 mils (i.e., 127 µm, such as 76.2 µm to 254 µm).

The substrate 102 is formed from a ceramic matrix composite ("CMC") material comprising silicon carbide As used herein, ceramic-matrix-composite or "CMC" refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may include a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃ 2SiO₂), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components, that would benefit from the lighter-weight and higher temperature capability these materials can offer.

As stated above, the bond coat 104 may be used in conjunction with an EBC 108 to form a coated component 100 with an increased operating temperature compared to that using only a silicon bond coat (without the matrix phase). The EBC 108 may include any combination of one or more layers formed from materials selected from typical EBC or thermal barrier coating ("TBC") layer chemistries, including but not limited to rare earth silicates (e.g., mono-silicates and di-silicates), aluminosilicates (e.g., mullite, barium strontium aluminosilicate (BSAS), rare earth aluminosilicates, etc.), hafnia, zirconia, stabilized hafnia, stabilized zirconia, rare earth hafnates, rare earth zirconates, rare earth gallium oxide, etc. The EBC may include a hafnia layer, an alumina layer, or both. Alternatively or additionally, the EBC may include a rare earth disilicate layer, a rare earth monosilicate layer, or both.

As used herein, environmental-barrier-coating or "EBC" refers to a coating system comprising one or more layers of ceramic materials, each of which provides specific or multi-functional protections to the underlying CMC. EBCs generally include a plurality of layers, such as rare earth silicate coatings (e.g., rare earth disilicates such as slurry or APS-deposited yttrium ytterbium disilicate (YbYDS)), alkaline earth aluminosilicates (e.g., comprising barium-strontium-aluminum silicate (BSAS), such as having a range of BaO, SrO, Al₂O₃, and/or SiO₂ compositions), hermetic layers (e.g., a rare earth disilicate), and/or outer coatings (e.g., comprising a rare earth monosilicate, such as slurry or APS-deposited yttrium monosilicate (YMS)). One or more layers may be doped as desired, and the EBC may also be coated with an abradable coating.

The EBC 108 may be formed from a plurality of individual layers 114, as shown in FIG. 1. In the embodiments shown, EBC 108 includes a hermetic layer 116 positioned in directly on the bond coat 104 so as to encase the discrete particles 110, upon melting, within the bond coat 104. In one embodiment, this hermetic layer is of mullite, up to 2 mil thick, such as preferably 0.1 mil to 1 mil thick (e.g., 0.1 mil to 0.5 mil thick). Since the discrete particles 110 are reactive with oxygen to form silicon oxide, there is minimal gaseous oxide produced (e.g., a carbon oxide) upon exposure of the component 100 to oxygen at operating temperatures. Thus, there is no need for a gas escape layer through the bond coat 104, and the hermetic layer may be included within the EBC 108. It is even desirable to have a hermetic layer to prevent the ingress of water vapor to the bond coat. In one embodiment, the hermetic layer 116 may be positioned directly on the bond coat 104, but may also be positioned elsewhere within the EBC 108.

The coated component 100 is particularly suitable for use as a component found in high temperature environments, such as those present in gas turbine engines, for example, combustor components, turbine blades, shrouds, nozzles, heat shields, and vanes. In particular, the coated component 100 may be a CMC component positioned within a hot gas flow path of the gas turbine such that the coating system 106 forms an environmental barrier for the underlying substrate 102 to protect the component 100 within the gas turbine when exposed to the hot gas flow path. In certain embodiments, the bond coat 104 is configured such that the coated component 100 is exposed to operating temperatures of 1475 °C to 1650 °C.

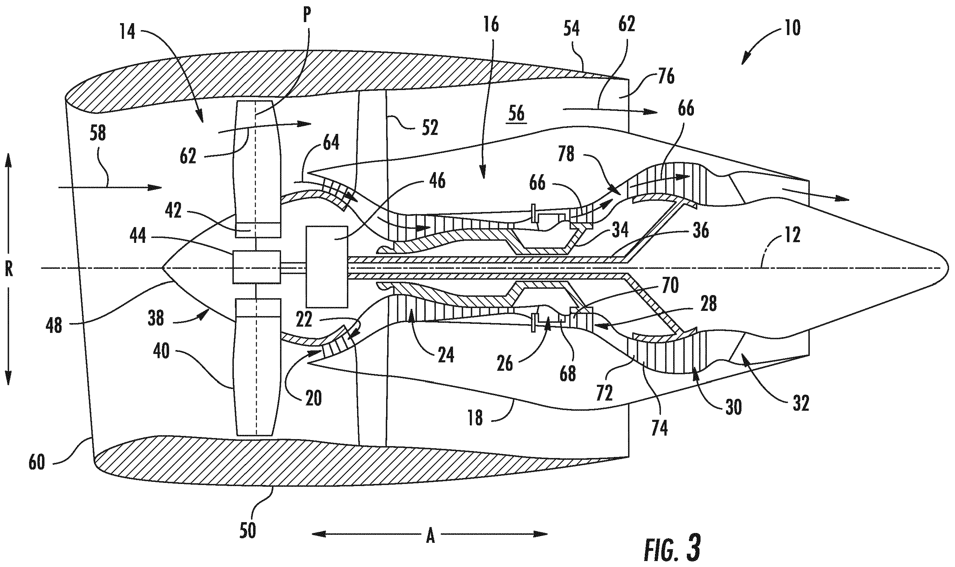

FIG. 3 is a schematic cross-sectional view of a gas turbine engine in accordance with an exemplary embodiment of the present disclosure. More particularly, for the embodiment of FIG. 3, the gas turbine engine is a high-bypass turbofan jet engine 10, referred to herein as "turbofan engine 10." As shown in FIG. 3, the turbofan engine 10 defines an axial direction A (extending parallel to a longitudinal axis 12 provided for reference) and a radial direction R. In general, the turbofan engine 10 includes a fan section 14 and a core turbine engine 16 disposed downstream from the fan section 14. Although described below with reference to a turbofan engine 10, the present disclosure is applicable to turbomachinery in general, including turbojet, turboprop and turboshaft gas turbine engines, including industrial and marine gas turbine engines and auxiliary power units. It is also applicable to other high temperature applications that contain water vapor in the gas phase, such as those arising from combustion of hydrocarbon fuels.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across an optional power gear box 46. The power gear box 46 includes a plurality of gears for stepping down the rotational speed of the LP shaft 36 to a more efficient rotational fan speed.

Referring still to the exemplary embodiment of FIG. 3, the disk 42 is covered by rotatable front nacelle 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan engine 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan engine 10, also providing propulsive thrust. The HP turbine 28, the LP turbine 30, and the jet exhaust nozzle section 32 at least partially define a hot gas path 78 for routing the combustion gases 66 through the core turbine engine 16.

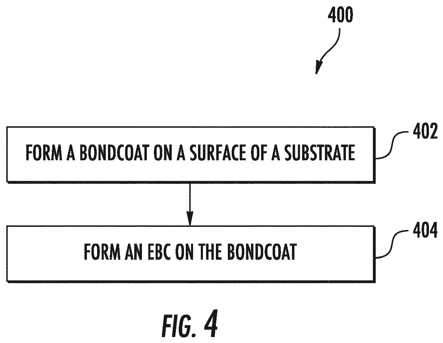

Methods are also generally provided for coating a ceramic component. For example, FIG. 4 shows a diagram of an exemplary method 400 of forming a coating system on a surface of a substrate. At 402, a bond coat is formed on the surface of the substrate to include discrete particles contained within a matrix phase, such as described above with respect to bond coat 104. In one embodiment, the bond coat is formed by air plasma spray. In another embodiment, it is formed by suspension plasma spray where a liquid suspension of the desired chemistry is used for air plasma spray. In still another embodiment, the coating is formed by low pressure plasma spray. In yet another embodiment one or more of the coated layers may be formed by a slurry coating process followed by sintering of the layers. Different coating layers may be formed by one or more of these processes.

At 404, an environmental barrier coating (EBC) is formed on the bond coat. As described above, the discrete particles, when melted, are contained within matrix phase between the surface of the substrate and an inner surface of the environmental barrier coating.

### EXAMPLE

An exemplary bond coat material was prepared using relatively coarse particles dispersed within a continuous mullite phase, and a comparative bond coat material was prepared using relatively fine particles dispersed within a continuous mullite phase.

The exemplary bond coat material was formed using mullite and elemental silicon particles having an average size of 20 µm. In the resulting exemplary bond coat material, the elemental silicon particles formed about 10% by volume of the exemplary bond coat material. The exemplary bond coat material was formed by spark plasma sintering (SPS) of a powder mixture of mullite and silicon, followed by hot-pressing into a pellet. This bond coat material served as an exemplary bond coat material, even though it is not a coating.

The comparative bond coat material was formed using mullite and elemental silicon particles having an average size of 1-2 µm, under the same method as the exemplary bond coat material. In the resulting comparative bond coat material, the elemental silicon particles formed about 10% by volume of the comparative bond coat material.

The exemplary bond coat material and the comparative bond coat material were then tested for oxidation rates by heating to 2400 °F 1315 °C) for 500 hours in an atmosphere containing 90% by volume water and 10% by volume oxygen.

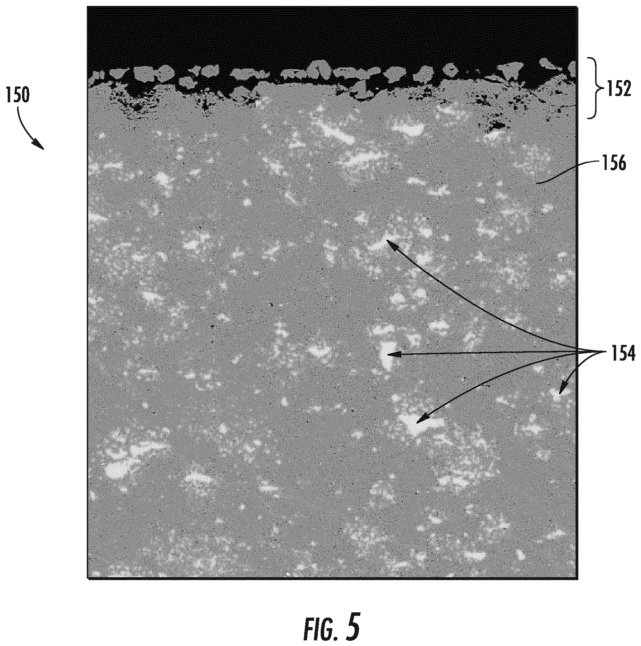

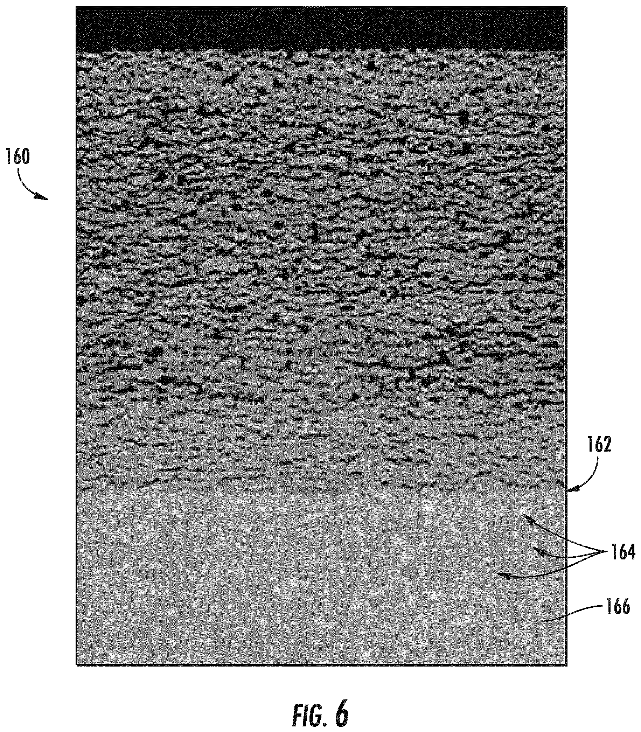

FIG. 5 shows the exemplary bond coat 150 after the oxidation test, and FIG. 6 shows the comparative bond coat 160 after the oxidation test. As clearly shown, the exemplary coating of FIG. 5 has a diffuse oxidation front 152 that has penetrated about 20 µm of the thickness of the bond coat 150, with the coarse discrete particles 154 remaining in the matrix 156 in the bond coat below the diffuse oxidation front 152. Conversely, the comparative coating of FIG. 6 has a sharp oxidation front 162 that has penetrated about 250 µm of the thickness of the bond coat 160, with the fine discrete particles 164 remaining in the matrix 166 in the bond coat 160 below the sharp oxidation front 162.

These results clearly show the exemplary bond coat 150 of FIG. 5 (with its larger discrete particles 154 of Si) had a slower oxygen diffusion rate than the comparative bond coat 160 of FIG. 6 (with its smaller discrete particles 164 of Si).

It is noted that the apparent mixture of coarse and smaller discrete particles in the exemplary bond coat 150 is believed to be a result of the pressing method used to make the exemplary bond coat 150. If formed into a bond coat via a slurry or other deposition technique, it is believed that the resulting bond coat would have much less (if any) of the smaller particles such that the coarse particles are a majority of the discrete phases (e.g., 50% of its volume or greater formed from the coarse particles, such as 75% of its volume or greater).

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples may be within the scope of the claims.

## Claims

1. A coated component (100) comprising:
a ceramic matrix composite substrate (102) comprising silicon carbide and having a surface (103);
a bondcoat (104) on the surface (103) of the substrate (102), wherein the bondcoat (104) comprises a plurality of discrete particles (110) dispersed within a matrix phase (112), wherein the matrix phase (112) comprises mullite and defines 60% to 98% by volume of the bondcoat (104), and wherein the plurality of discrete particles (110) comprises an oxygen getter and has 50% of its volume or greater formed of particles having an average size of 10 µm to 100 µm; and
an environmental barrier coating (108) on the bondcoat (104).

2. The coated component (100) as in the preceding claim, wherein the plurality of discrete particles (110) has 50% of its volume or greater formed from particles having an average size of 20 µm to 75 µm.

3. The coated component (100) as in any preceding claim, wherein the plurality of discrete particles (110) has 50% of its volume or greater formed from particles having an average size of 30 µm to 50 µm.

4. The coated component (100) as in any preceding claim, wherein the plurality of discrete particles (110) has 75% of its volume or greater formed from particles having an average size of 10 µm to 100 µm.

5. The coated component (100) as in any preceding claim, wherein the plurality of discrete particles (110) has 75% of its volume or greater formed from particles having an average size of 20 µm to 75 µm.

6. The coated component (100) as in any preceding claim, wherein the plurality of discrete particles (110) has 75% of its volume or greater formed from particles having an average size of 30 µm to 50 µm.

7. The coated component (100) as in any preceding claim, wherein the plurality of discrete particles (110) has 75% of its volume or greater formed from particles having an average size of 10 µm to 60 µm.

8. The coated component (100) as in any preceding claim, wherein the oxygen getter comprises elemental silicon, a silicon alloy, a silicide, or a mixture thereof.

9. The coated component (100) as in any preceding claim, wherein the matrix phase (112) is a continuous phase, and wherein the matrix phase (112) spans the bondcoat (104) and is bonded directly to the surface (103) of the substrate (102) and to an inner surface of the environmental barrier coating (108).

10. The coated component (100) as in any preceding claim, wherein the matrix phase (112) defines 65% to 96% by volume of the bondcoat (104).

11. The coated component (100) as in any preceding claim, wherein the matrix phase (112) defines 75% to 95% by volume of the bondcoat (104).

12. The coated component (100) as in any preceding claim, wherein the matrix phase (112) comprises mullite, wherein the environmental barrier coating (108) comprises a plurality of layers with at least one of the layers of the environmental barrier coating (108) comprises a hermetic layer.

13. The coated component (100) of claim 12, wherein the hermetic layer is adjacent to the bondcoat (104) such that the hermetic layer defines an inner surface of the environmental barrier coating (108).

14. A method of forming a coated component (100), the method comprising:
forming a bondcoat (104) on a surface (103) of a substrate (102) from a mixture of a matrix material and a plurality of discrete particles (110), wherein the matrix material comprises mullite, and wherein the plurality of discrete particles (110) comprises an oxygen getter and has 50% of its volume or greater having an average size of 10 µm to 60 µm; and
forming an environmental barrier coating (108) on the bondcoat (104) such that the plurality of discrete particles (110), when melted, are contained within matrix phase (112) between the surface (103) of the substrate (102) and an inner surface of the environmental barrier coating (108).

## Patentansprüche

1. Beschichtete Komponente (100), umfassend:
ein Keramikmatrixverbundstoffsubstrat (102), das Siliciumcarbid umfasst und eine Oberfläche (103) aufweist;
eine Haftschicht (104) auf der Oberfläche (103) des Substrats (102), wobei die Haftschicht (104) eine Vielzahl diskreter Partikel (110) umfasst, die in einer Matrixphase (112) dispergiert sind, wobei die Matrixphase (112) Mullit umfasst und 60 bis 98 Vol.-% der Haftschicht (104) definiert und wobei die Vielzahl diskreter Partikel (110) einen Sauerstoffgetter umfasst und zu 50 oder mehr Prozent ihres Volumens aus Partikeln mit einer durchschnittlichen Größe von 10 bis 100 µm gebildet ist; und
eine Umweltbarrierebeschichtung (EBC) (108) über der Haftschicht (104);

2. Beschichtete Komponente (100) nach dem vorstehenden Anspruch, wobei die Vielzahl diskreter Partikel (110) zu 50 % ihres Volumens oder mehr aus Partikeln mit einer durchschnittlichen Größe von 20 µm bis 75 µm gebildet ist.

3. Beschichtete Komponente (100) nach einem der vorstehenden Ansprüche, wobei die Vielzahl diskreter Partikel (110) zu 50 % ihres Volumens oder mehr aus Partikeln mit einer durchschnittlichen Größe von 30 µm bis 50 µm gebildet ist.

4. Beschichtete Komponente (100) nach einem der vorstehenden Ansprüche, wobei die Vielzahl diskreter Partikel (110) zu 75 % ihres Volumens oder mehr aus Partikeln mit einer durchschnittlichen Größe von 10 µm bis 100 µm gebildet ist.

5. Beschichtete Komponente (100) nach einem der vorstehenden Ansprüche, wobei die Vielzahl diskreter Partikel (110) zu 75 % ihres Volumens oder mehr aus Partikeln mit einer durchschnittlichen Größe von 20 µm bis 75 µm gebildet ist.

6. Beschichtete Komponente (100) nach einem der vorstehenden Ansprüche, wobei die Vielzahl diskreter Partikel (110) zu 75 % ihres Volumens oder mehr aus Partikeln mit einer durchschnittlichen Größe von 30 µm bis 50 µm gebildet ist.

7. Beschichtete Komponente (100) nach einem der vorstehenden Ansprüche, wobei die Vielzahl diskreter Partikel (110) zu 75 % ihres Volumens oder mehr aus Partikeln mit einer durchschnittlichen Größe von 10 µm bis 60 µm gebildet ist.

8. Beschichtete Komponente (100) nach einem der vorstehenden Ansprüche, wobei der Sauerstoffgetter elementares Silicium, eine Siliciumlegierung, ein Silicid oder eine Mischung davon umfasst.

9. Beschichtete Komponente (100) nach einem der Ansprüche 1 bis 112, wobei die Matrixphase (112) eine kontinuierliche Phase ist und wobei die Matrixphase (112) die Haftschicht (104) überspannt und direkt an die Oberfläche (103) des Substrats (102) und an eine Innenoberfläche der Umweltbarrierebeschichtung (108) gebunden ist.

10. Beschichtete Komponente (100) nach einem der vorstehenden Ansprüche, wobei die Matrixphase (112) 65 bis 96 Vol.-% der Haftschicht (104) definiert.

11. Beschichtete Komponente (100) nach einem der vorstehenden Ansprüche, wobei die Matrixphase (112) 75 bis 95 Vol.-% der Haftschicht (104) definiert.

12. Beschichtete Komponente (100) nach einem der vorstehenden Ansprüche, wobei die Matrixphase (112) Mullit umfasst, wobei die Umweltbarrierebeschichtung (108) mehrere Schichten umfasst, wobei mindestens eine der Schichten der Umweltbarrierebeschichtung (108) eine hermetische Schicht umfasst.

13. Beschichtete Komponente (100) nach Anspruch 12, wobei die hermetische Schicht an die Haftschicht (104) angrenzt, sodass die hermetische Schicht eine Innenoberfläche der Umweltbarrierebeschichtung (108) definiert.

14. Verfahren zum Bilden einer beschichteten Komponente (100), wobei das Verfahren umfasst:
Bilden einer Haftschicht (104) auf einer Oberfläche (103) eines Substrats (102) aus einer Mischung eines Matrixmaterials und einer Vielzahl diskreter Partikel (110), wobei das Matrixmaterial Mullit umfasst und wobei die Vielzahl diskreter Partikel (110) einen Sauerstoffgetter umfasst und zu 50 % oder mehr ihres Volumens eine durchschnittliche Größe von 10 µm bis 60 µm aufweist; und
Bilden einer Umweltbarrierebeschichtung auf der Haftschicht, sodass die Vielzahl diskreter Partikel (110) beim Schmelzen innerhalb der Matrixphase (112) zwischen der Oberfläche (103) des Substrats (102) und einer Innenoberfläche der Umweltbarrierebeschichtung (108) enthalten ist.

## Revendications

1. Composant revêtu (100) comprenant :
un substrat composite à matrice céramique (102) comprenant du carbure de silicium et ayant une surface (103) ;
une couche de liaison (104) sur la surface (103) du substrat (102), dans lequel la couche de liaison (104) comprend une pluralité de particules discrètes (110) dispersées au sein d'une phase matricielle (112), dans lequel la phase matricielle (112) comprend de la mullite et définit 60 % à 98 % en volume de la couche de liaison (104), et dans lequel la pluralité de particules discrètes (110) comprend un capteur d'oxygène et a 50 % de son volume ou plus formé de particules ayant une taille moyenne de 10 µm à 100 µm ; et
un revêtement barrière environnementale (108) sur la couche de liaison (104).

2. Composant revêtu (100) selon la revendication précédente, dans lequel la pluralité de particules discrètes (110) a 50 % de son volume ou plus formé de particules ayant une taille moyenne de 20 µm à 75 µm.

3. Composant revêtu (100) selon l'une quelconque revendication précédente, dans lequel la pluralité de particules discrètes (110) a 50 % de son volume ou plus formé de particules ayant une taille moyenne de 30 µm à 50 µm.

4. Composant revêtu (100) selon l'une quelconque revendication précédente, dans lequel la pluralité de particules discrètes (110) a 75 % de son volume ou plus formé de particules ayant une taille moyenne de 10 µm à 100 µm.

5. Composant revêtu (100) selon l'une quelconque revendication précédente, dans lequel la pluralité de particules discrètes (110) a 75 % de son volume ou plus formé de particules ayant une taille moyenne de 20 µm à 75 µm.

6. Composant revêtu (100) selon l'une quelconque revendication précédente, dans lequel la pluralité de particules discrètes (110) a 75 % de son volume ou plus formé de particules ayant une taille moyenne de 30 µm à 50 µm.

7. Composant revêtu (100) selon l'une quelconque revendication précédente, dans lequel la pluralité de particules discrètes (110) a 75 % de son volume ou plus formé de particules ayant une taille moyenne de 10 µm à 60 µm.

8. Composant revêtu (100) selon l'une quelconque revendication précédente, dans lequel le capteur d'oxygène comprend du silicium élémentaire, un alliage de silicium, un siliciure, ou un mélange de ceux-ci.

9. Composant revêtu (100) selon l'une quelconque revendication précédente, dans lequel la phase matricielle (112) est une phase continue, et dans lequel la phase matricielle (112) s'étend sur la couche de liaison (104) et est liée directement à la surface (103) du substrat (102) et à une surface interne du revêtement barrière environnementale (108).

10. Composant revêtu (100) selon l'une quelconque revendication précédente, dans lequel la couche matricielle (112) définit 65 % à 96 % en volume de la couche de liaison (104).

11. Composant revêtu (100) selon l'une quelconque revendication précédente, dans lequel la phase matricielle (112) définit 75 % à 95 % en volume de la couche de liaison (104).

12. Composant revêtu (100) selon l'une quelconque revendication précédente, dans lequel la phase matricielle (112) comprend de la mullite, dans lequel le revêtement barrière environnementale (108) comprend une pluralité de couches, au moins l'une des couches du revêtement barrière environnementale (108) comprenant une couche hermétique.

13. Composant revêtu (100) selon la revendication 12, dans lequel la couche hermétique est adjacente à la couche de liaison (104) de telle sorte que la couche hermétique définit une surface interne du revêtement barrière environnementale (108).

14. Procédé de formation d'un composant revêtu (100), le procédé comprenant :
la formation d'une couche de liaison (104) sur une surface (103) d'un substrat (102) à partir d'un mélange d'un matériau matriciel et d'une pluralité de particules discrètes (110), dans lequel le matériau matriciel comprend de la mullite, et dans lequel la pluralité de particules discrètes (110) comprend un capteur d'oxygène et a 50 % de son volume ou plus ayant une taille moyenne de 10 µm à 60 µm ; et
la formation d'un revêtement barrière environnementale (108) sur la couche de liaison (104) de telle sorte que les particules discrètes (110), lorsqu'elles ont fondu, sont contenues au sein de la phase matricielle (112) entre la surface (103) du substrat (102) et une surface interne du revêtement barrière environnementale (108).
